## Europäisches Patentamt
## European Patent Office
## Office européen des brevets

(19)

(11) Veröffentlichungsnummer: **0 126 793**
**B1**

(12)

# EUROPÄISCHE PATENTSCHRIFT

(45) Veröffentlichungstag der Patentschrift:
**27.08.86**

(21) Anmeldenummer: **83105305.3**

(22) Anmeldetag: **28.05.83**

(51) Int. Cl.⁴: **B 23 Q 11/00**, B 23 Q 1/00

(54) **Vorrichtung zur Absaugung von Kühl- und/oder Schmiermittel aus einer Bohrung bei einer Tiefbohrmaschine.**

(43) Veröffentlichungstag der Anmeldung:
**05.12.84 Patentblatt 84/49**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**WO - A - 81/02129
DE - A - 2 417 228
US - A - 2 946 244
US - A - 2 985 468
US - A - 3 024 030
US - A - 3 561 299
US - A - 3 791 660**

(73) Patentinhaber: **TBT Tiefbohrtechnik GmbH und Co. KG.,
Siemensstrasse 1, D-7433 Dettingen (DE)**

(72) Erfinder: **Schmid, Wolfgang, Corneliusstrasse 21,
D-7433 Dettingen (DE)**
Erfinder: **Braunwarth, Rolf, Nürtinger Strasse 39,
D-7442 Neuffen (DE)**

(74) Vertreter: **Dreiss, Uwe, Dr. jur. Dipl.-Ing. M.Sc. et al,
Patentanwälte Dreiss, Hosenthien & Fuhlendorf
Gerokstrasse 6, D-7000 Stuttgart 1 (DE)**

# Beschreibung

Die Erfindung betrifft eine Vorrichtung zur Absaugung von Kühl- und/oder Schmiermittel aus einer Bohrung bei einer Tiefbohrmaschine, bei der durchgehend durch Bohrer, Bohrspindel, und eine sich an diese anschliessende Nabe ein Kanal vorgesehen ist, dem das Kühl- und Schmiermittel beim Bohren durch eine senkrecht zu diesem Kanal verlaufende Leitung zugeführt wird.

Das sog. „Tiefbohren", z.B. nach dem Einlippen-Bohrverfahren, ist im wesentlichen dadurch gekennzeichnet, dass beim Bohrvorgang unter Druck Kühl- und Schmiermittel an die Schnittstelle gebracht wird, dort beim Bohren sowohl kühlt als auch schmiert, und dann die beim Bohren entstehenden Späne abtransportiert. Beim Einlippen-Bohrverfahren erfolgt die Zufuhr des Kühl- und Schmiermittels über einen im Inneren in axialer Richtung im Einlippenbohrer verlaufenden Kanal, während die Abführung des Kühl- und Schmiermittels einschliesslich der beim Bohren entstehenden Späne über eine nach aussen hin offene Nut im Bohrer erfolgt. Ein Problem hierbei ist es, dass nach Beendigung des Bohrvorganges in der Bohrung Kühl- und Schmiermittel, z.B. hierzu verwendetes Bohröl, verbleibt. Bei nachfolgenden Bearbeitungsvorgängen stört dies insbesondere dann, wenn bei diesen etwa Emulsionen verwendet werden, die sich dann mit dem Bohröl vermischen und in ihrer Funktion dadurch beeinträchtigt werden. Es müssen dann aufwendige Abscheider im Rückgewinnungsvorgang vorgesehen werden, etc. Nach dem Tiefbohren in der Bohrung verbleibendes Bohröl muss, je nach der weiteren Benutzung dieser Bohrung, auch unter Umständen in einem separaten Reinigungsvorgang entfernt werden, der seinerseits wieder entsprechende Vorrichtungen benötigt.

Demgemäss ist es Aufgabe der vorliegenden Erfindung, bei herkömmlichen Tiefbohrmaschinen in einfacher Weise eine Möglichkeit vorzusehen, dass Kühl- und Schmiermittel nach Beendigung des Bohrvorganges aus der Bohrung zu entfernen.

Erfindungsgemäss wird dies dadurch gelöst, dass zur Absaugung des Kühl- und Schmiermittels aus der Bohrung die senkrecht zu dem genannten Kanal verlaufende Leitung in einer Ejektordüse endet, aus der das Kühl- und Schmiermittel als freier Strahl in einen weiteren Kanal austreten kann, wobei die Anordnung der Ejektordüse bezüglich des erstgenannten Kanals derart ist, dass bei freiem Austritt des Strahls aus der Ejektordüse in dem erstgenannten Kanal ein Unterdruck entsteht, und dass ferner ein Ventil vorgesehen ist, durch das der zweitgenannte im Anschluss an die Ejektordüse vorgesehene Kanal in Bohrstellung verschliessbar ist, während er für die Absaugung geöffnet wird.

Man macht also im Prinzip nichts anderes als bei einer herkömmlichen Zuführung von Kühl- und Schmiermittel, die sowieso schon über eine Leitung erfolgt, die senkrecht zu dem genannten Kanal durch Bohrer, Bohrspindeln usw. verläuft, am Abschluss eine Ejektordüse vorzusehen, die, wenn man dem aus ihr austretenden Strahl freien Lauf lässt, in dem Kanal, der zur Bohrung führt, einen Unterdruck erzeugt, der das Kühl- und Schmiermittel aus der Bohrung absaugt; lässt man dem aus der Ejektordüse austretenden Strahl keinen freien Lauf, indem man den der Ejektordüse gegenüberliegenden Kanal versperrt (z.B. durch ein Ventil), so entfällt diese Wirkung. Vielmehr wird der aus der Ejektordüse austretende Kühl- und Schmiermittelstrahl in die Bohrspindel und den Bohrer umgelenkt und dient wie seither auch zur Zuführung des Kühl- und Schmiermittels an die Bohrstelle.

Damit ist es in besonders einfacher Weise gelungen, die an sich bei jeder Tiefbohrmaschine vorhandene Einrichtung zur Zuführung von Kühl- und Schmiermittel so zu modifizieren, dass man mit ihr auch das Kühl- und Schmiermittel aus der Bohrung nach Beendigung des Bohrvorganges absaugen kann.

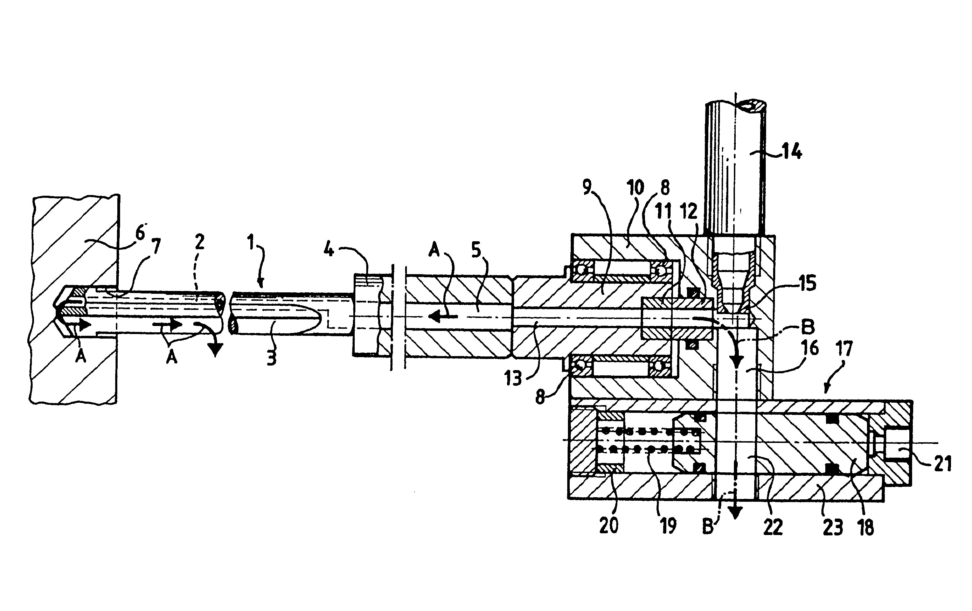

Die Erfindung wird im folgenden anhand eines Ausführungsbeispieles näher beschrieben. Dieses Ausführungsbeispiel ist in der einzigen Figur schematisch dargestellt (ohne Antriebsmechanismus für die Bohrspindel, da dieser auch bei diesem Ausführungsbeispiel konventioneller Art ist).

Mit einem sog. „Einlippenbohrer" 1 wird eine Bohrung 7 in dem Material 6 gebohrt. Der Einlippenbohrer 1 weist in seinem Inneren einen Kanal 2 auf, über den während des Bohrvorgangs ein Kühl- und Schmiermittel, z.B. Bohröl, an die Schnittstelle zugeführt wird. Die Ableitung erfolgt entlang des Umfangs des Einlippenbohrers 1 über eine nach aussen offene Nut 3. Das Bohröl nimmt den durch Pfeile A, die in durchgehenden Linien eingezeichnet sind, eingezeichneten Verlauf. Der Einlippenbohrer 1 wird in einer Bohrspindel 4 aufgenommen, die angetrieben wird. Der Antrieb ist in der Figur nicht dargestellt; er ist herkömmlicher Art und daher von einem Fachmann ohne weiteres realisierbar. An die Bohrspindel 4 schliesst sich eine Nabe 9 an, die in dem Gehäuse 10 mittels Kugellager 8 drehbar gelagert ist. In die Nabe ist ein Gleitring 11 fest eingesetzt, der sich mit der Nabe 9 mitdreht. Im Gehäuse 10 ist ein weiterer Gleitring 12 ebenfalls fest eingesetzt, so dass er sich nicht mitdreht. Beide Gleitringe bilden miteinander eine Gleitringdichtung. In der Nabe 9 ist ein Kanal 13 vorgesehen.

Die Zuführung des Kühl- und Schmiermittels, z.B. Bohröl, erfolgt über die Leitung 14 und eine Ejektordüse 15, deren Achse senkrecht zu dem Kanal 13 in der Nabe 9 gerichtet ist. Die Ejektordüse 15 öffnet sich in einen Kanal 16, dessen Ausgang in der Bohrstellung durch den Kolben 18 des Ventils 17 verschlossen ist und in der Entleerungsstellung durch die Bohrung 22 im Kolben 18 und die sich anschliessende Bohrung 24 im Gehäuse 23 freigegeben wird.

Der Kolben 18 des Ventils 17 wird durch eine Feder 19 in die in der Figur dargestellte Entleerungsstellung gedrückt. Die Feder 19 wird an ihrem (in der Figur rechten) einen Ende von einem Sackloch im Kolben 18 aufgenommen, während sie sich mit ihrem anderen Ende an einem Verschlussstopfen abstützt, der in das Ventilgehäuse 23 eingeschraubt ist. Wird die (in der Figur) rechte Stirnfläche des Kolbens 18 mit Druckluft beaufschlagt, etwa über eine Leitung, die in die Bohrung 21 eingeschraubt ist, so bewegt sich der Kolben 18 unter dem Druck dieses Mediums nach links und verschliesst den Kanal 16.

In der *Bohrstellung* (Kolben 18 nach links; Kanal 16 somit verschlossen) wird da aus der Ejektordüse 15 austretende Kühl- und Schmiermittel umgelenkt und tritt über den Kanal 13 in die Nabe 9, den Kanal 5 in der Bohrspindel 4 und den Kanal 2 in dem Einlippenbohrer 1 an die Bohrstelle aus, von wo es über die nach aussen offene Nut 3 dann wieder nach aussen abgelenkt wird und dabei die beim Bohren anfallenden Späne mitnimmt (siehe die in durchgehenden Linien eingezeichneten Pfeile A).

In der *Entleerungsstellung* (Kolben 18 wie in der Figur) tritt der aus der Ejektordüse 15 austretende Strahl des Kühl- und Schmiermittels in den Kanal 16 und von dort über die Bohrungen 22, 24 in einen Tank aus. Durch diese Ableitung des Kühl- und Schmiermittels ist das Austreten des Strahls aus der Ejektordüse unbehindert. Dadurch tritt senkrecht zu der Strahlrichtung beim Austritt aus der Ejektordüse 15 ein Unterdruck auf. Dieses Phänomen ist von jeder Strahlpumpe her bekannt. Es führt zu einem Unterdruck in den Kanälen 13, 5, 2 und saugt damit das Kühl- und Schmiermittel aus diesen Kanälen und aus der Bohrung 7 zurück (siehe die in strichpunktierten Linien eingezeichneten Pfeile B).

Es wird also die zu dem Kanal 13 senkrecht verlaufende Zuführung des Kühl- und Schmiermittels dazu ausgenützt, bei entsprechender Freigabe des aus der Ejektordüse 15 austretenden Strahls in den Kanal 16 bei Entleerungsstellung des Ventils 17 über die Zuführung des Kühl- und Schmiermittels einen Sog in umgekehrter Richtung zu erzeugen, der auf demselben Weg, über den in Bohrstellung das Kühl- und Schmiermittel zugeführt wird, nun auch in Entleerungsstellung wirksam wird und in der Bohrung 7 vorhandenes Kühl- und Schmiermittel absaugt. Dieser Unterdruck wird auch in der Nut 3 wirksam.

## Patentanspruch

Vorrichtung zur Absaugung von Kühl- und/oder Schmiermittel aus einer Bohrung bei einer Tiefbohrmaschine, bei der durchgehend durch Bohrer (1), Bohrspindel (4), und eine sich an diese anschliessende Nab (9) ein Kanal (2, 5, 13) vorgesehen ist, dem das Kühl- und Schmiermittel beim Bohren durch eine senkrecht zu diesem Kanal (2, 5, 13) verlaufende Leitung (14) zugeführt wird, dadurch gekennzeichnet, dass zur Absaugung des Kühl- und Schmiermittels aus der Bohrung (7) die senkrecht zu dem genannten Kanal (2, 5, 13) verlaufende Leitung (14) in eine Ejektordüse (15) endet, aus der das Kühl- und Schmiermittel als freier Strahl in einen weiteren Kanal (16) austreten kann, wobei die Anordnung der Ejektordüse (15) bezüglich des erstgenannten Kanals (2, 5, 13) derart ist, dass bei freiem Austritt des Strahls aus der Ejektordüse (15) in dem erstgenannten Kanal ein Unterdruck entsteht, und dass ferner ein Ventil (17) vorgesehen ist, durch das der zweitgenannte, im Anschluss an die Ejektordüse (15) vorgesehene Kanal (16) in Bohrstellung verschliessbar ist, während er für die Absaugung geöffnet wird.

## Claim

Device for draining off by suction the cooling and/or lubricating medium from a boring in connection with a deep drilling machine, with which continuously extending through the drilling tool (1), the drilling spindle (4), and an adjacent hub (9) a channel (2, 5, 13) is provided, to which the cooling and lubricating medium is supplied by a supply line (14) extending perpendicularly to this channel (2, 5, 13), characterized in that for draining off the cooling and lubricating medium by suction from the boring (7) the supply line (14) extending perpendicularly to the said channel (2, 5, 13) ends in an ejecting nozzle (15), from which the cooling and lubricating medium can emerge as a free jet, and with which the arrangement of the ejecting nozzle (15) in relation to the first mentioned channel (2, 5, 13) is such that upon free emergence of the jet from the ejecting nozzle (15) a negative pressure is generated in the fist mentioned channel, and that further a valve (17) is provided, by which the second mentioned channel (16) provided in adjacent connection to the ejector nozzle (15) can be closed, whilst being opened for the suction process.

## Revendication

Dispositif d'aspiration d'un agent de refroidissement et/ou de graissage hors d'un trou dans une machine à percer des trous profonds, dans lequel il est prévu un canal qui traverse le foret (1), la broche de perçage (4) et un moyeu (9) se raccordant à celle-ci et auquel l'agent de refroidissement et de graissage est conduit pendant l'opération de perçage par une conduite (14) disposée perpendiculairement à ce canal (2, 5, 13), caractérisé en ce que, pour aspirer hors du trou (7) l'agent de refroidissement et de graissage, la conduite (14) dirigée perpendiculairement au canal susdit (2, 5, 13) se termine par une buse d'éjection (15) à partir de laquelle l'agent de refroidissement et de graissage peut passer comme un jet libre dans un canal supplémentaire (16), la disposition de la buse d'éjection (15) par rapport au premier canal (2, 5, 13) étant telle que, par suite de la sortie libre du jet par la buse d'éjection (15), il se crée une dépression dans le premier canal, et en ce qu'il est prévu en outre une vanne (17) au moyen de laquelle le deuxième canal prévu en liaison avec la buse d'éjection (15) peut être fermé à l'état de perçage alors qu'il est ouvert pour l'aspiration.

0 126 793